# EUROPEAN PATENT APPLICATION

(11) **EP 4 656 914 A1**
(43) Date of publication of application: **03.12.2025**
(21) Application number: 23924943.6
(22) Date of filing: 13.10.2023
(51) Int. Cl.: F16K 11/074, B60L 58/26

(54) **TEMPERATURE CONTROL SYSTEM, VEHICLE, ENERGY STORAGE SYSTEM, AND MULTI-WAY VALVE**

(30) Priority: 28.02.2023 CN 202310233811
(71) Applicant: Huawei Digital Power Technologies Co., Ltd., Shenzhen, Guangdong 518043 (CN)
(72) Inventor: HUANG, Tao, Shenzhen, Guangdong 518043 (CN); LI, Malin, Shenzhen, Guangdong 518043 (CN); LU, Linfeng, Shenzhen, Guangdong 518043 (CN); MENG, Hao, Shenzhen, Guangdong 518043 (CN)
(74) Representative: Isarpatent
(86) International application number: PCT/CN2023/124608
(87) International publication number: WO 2024/178989

(57) **Abstract**

This application provides a temperature control system, a vehicle, an energy storage system, and a multi-way valve. The temperature control system includes a plurality of liquid pipes and a multi-way valve. The multi-way valve includes a first valve body and a second valve body. The first valve body includes a first plane, the second valve body includes a second plane, and the first plane and the second plane are parallel and attached to each other. A driver drives the first plane and the second plane to rotate relative to each other around a rotation axis. The first plane includes a plurality of groups of first sector ring openings, the plurality of first sector ring openings are divided into a plurality of rings by using the rotation axis as a circle center and are spaced apart, and two first sector ring openings in each group of first sector ring openings communicate with each other by using an internal channel of the first valve body. The second plane includes a plurality of groups of second sector ring openings, each group of second sector ring openings is arranged in an annular manner by using the rotation axis as a circle center, and each second sector ring opening is configured to communicate with at least one first sector ring opening and connect to at least one liquid pipe by using an internal channel of the second valve body. In this technical solution, a leakage risk of the multi-way valve is relatively low.

## Description

### CROSS-REFERENCE TO RELATED APPLICATIONS

This application claims priority to Chinese Patent Application No. 202310233811.5, filed with the China National Intellectual Property Administration on February 28, 2023 and entitled "TEMPERATURE CONTROL SYSTEM, VEHICLE, ENERGY STORAGE SYSTEM, AND MULTI-WAY VALVE", which is incorporated herein by reference in its entirety.

### TECHNICAL FIELD

This application relates to the field of flow distribution system technologies, and specifically, to a temperature control system, a vehicle, an energy storage system, and a multi-way valve.

### BACKGROUND

With the booming development of industries such as new energy vehicles and energy storage stations, importance and complexity of temperature control systems are gradually increasing, especially complexity of liquid pipes. For example, in an energy storage system, functional modules that may use a liquid pipe include battery cooling, battery heat pump heating, battery thermistor heating, load (power conversion system, PCS) cooling, energy storage cabinet dehumidification, and the like. In the automobile field, the functional modules further include motor cooling, passenger cabin cooling and heating, and the like. To control temperatures at different positions of an entire device by using one temperature control system, a multi-way valve usually needs to be disposed in a liquid cooling pipe of the temperature control system, to implement flow distribution, flow combination, or adjustment of a flow path of liquid in the liquid pipe.

However, a multi-way valve in a conventional technology usually includes a valve body and a valve plug. The valve body and the valve plug cooperate with each other by using a curved surface, and therefore internal leakage is likely to occur. In addition, a contact surface is large, friction is relatively large, and a torque requirement for a driving component is also relatively high.

### SUMMARY

This application provides a temperature control system, a vehicle, an energy storage system, and a multi-way valve, to help reduce a leakage risk of the temperature control system.

According to a first aspect, this application provides a temperature control system. The temperature control system includes a driver, a plurality of liquid pipes, and a multi-way valve. The plurality of liquid pipes are respectively configured to transmit coolant to one or more heat emitting devices, to control a temperature of the heat emitting device. The liquid pipes are connected to the multi-way valve. The driver is configured to drive, based on a temperature of one or more liquid pipes or the heat emitting device, the multi-way valve to move. The driver drives the multi-way valve to adjust a working mode, so that the liquid pipes have different communication solutions. Specifically, the multi-way valve includes a first valve body and a second valve body, the first valve body includes a first plane, the second valve body includes a second plane, and the first plane and the second plane are parallel and attached to each other. The driver is configured to drive, based on the temperature of the one or more liquid pipes or the heat emitting device, the first plane and the second plane to rotate relative to each other around a rotation axis of the multi-way valve. The first plane includes a plurality of groups of first sector ring openings, each group of first sector ring openings includes two first sector ring openings that are spaced apart, the plurality of first sector ring openings are divided into a plurality of rings by using the rotation axis as a circle center and are spaced apart, and the two first sector ring openings in each group of first sector ring openings communicate with each other by using an internal channel of the first valve body. The second plane includes a plurality of groups of second sector ring openings, each group of second sector ring openings includes a plurality of second sector ring openings that are spaced apart, each group of second sector ring openings is arranged in an annular manner by using the rotation axis as a circle center, and each second sector ring opening is configured to communicate with at least one first sector ring opening and connect to at least one liquid pipe by using an internal channel of the second valve body. In this technical solution, the first valve body and the second valve body cooperate with each other by using planes, and contact between the planes is relatively reliable, so that a leakage problem is not likely to occur. In addition, the first valve body and the second valve body each have an internal channel, leakage is not likely to occur in the internal channel, and a problem of cross-flow leakage is not likely to occur between channels, so that a leakage probability of the multi-way valve is further reduced.

In a specific technical solution, a central angle of each first sector ring opening is equal to a preset angle value, at least one second sector ring opening in each group of second sector ring openings includes one or more radial baffle plates, the at least one second sector ring opening is divided into at least two sections of sector ring openings by the radial baffle plate, and a central angle of each section of sector ring opening is equal to the preset angle value. Each section of sector ring opening is configured to communicate with one first sector ring opening. When the second sector ring opening is divided into at least two sections of sector ring openings by the radial baffle plate, flow distribution or flow combination may be implemented. Alternatively, when the multi-way valve adjusts the working mode, that is, when the first valve body is driven to rotate relative to the second valve body, the second internal channel may still communicate with a same first internal channel in different working modes.

When the radial baffle plate is specifically disposed, each radial baffle plate is fastened to the second sector ring opening along a radial direction of the second sector ring opening. A specific fastening manner of the radial baffle plate is not limited. For example, the radial baffle plate and the second valve body may be integrated, or the radial baffle plate may be fastened to the second valve body by using a welding or bonding process.

In another specific technical solution, a difference between an inner diameter and an outer diameter of each second sector ring opening is equal to a preset length value, one first sector ring opening in at least one group of first sector ring openings includes one circumferential baffle plate, the circumferential baffle plate is configured to divide the second sector ring opening into two layers of sector ring openings, and a difference between an inner diameter and an outer diameter of each layer of sector ring opening is equal to the preset length value. Each layer of sector ring opening is configured to communicate with one second sector ring opening. When the first sector ring opening is divided into at least two layers of sector ring openings by the circumferential baffle plate, flow distribution or flow combination may be implemented. Alternatively, when the multi-way valve adjusts the working mode, that is, when the first valve body is driven to rotate relative to the second valve body, the first internal channel may still communicate with a same second internal channel in different working modes.

When the circumferential baffle plate is specifically disposed, each circumferential baffle plate is fastened to the first sector ring opening along a circumferential direction of the first sector ring opening. A specific fastening manner of the circumferential baffle plate is not limited. For example, the circumferential baffle plate and the first valve body may be integrated, or the circumferential baffle plate may be fastened to the first valve body by using a welding or bonding process.

In a specific technical solution, the first plane includes a plurality of rings of first sector ring openings, and the plurality of rings of first sector ring openings include a first ring of first sector ring openings, a second ring of first sector ring openings, a third ring of sector ring openings, and a fourth ring of sector ring openings that are sequentially arranged along a direction away from the rotation axis. The second plane includes a plurality of groups of second sector ring openings, and the plurality of groups of second sector ring openings include a first group of second sector ring openings, a second group of second sector ring openings, a third group of second sector ring openings, and a fourth group of second sector ring openings that are sequentially arranged along the direction away from the rotation axis. Each ring of first sector ring openings is located in a same circular ring, and each group of second sector ring openings is located in a same circular ring. Circular rings in which the plurality of groups of second sector ring openings are located are in a one-to-one correspondence with circular rings in which the plurality of rings of first sector ring openings are located. Each second sector ring opening is configured to communicate with a first sector ring opening located in a same circular ring.

The following lists several arrangement manners of first sector ring openings on the first plane and arrangement manners of second sector ring openings on the second plane.

In an arrangement manner, the first plane includes the first ring of first sector ring openings, the first ring of first sector ring openings includes six first sector ring openings, and the six first sector ring openings are respectively located in five groups of first sector ring openings. The second plane includes the first group of second sector ring openings, the first group of second sector ring openings includes four second sector ring openings, each second sector ring opening in the first group of second sector ring openings includes one radial baffle plate, and each second sector ring opening in the first group of second sector ring openings is configured to communicate with any first sector ring opening in the first ring of first sector ring openings.

In another arrangement manner, the first plane includes the second ring of first sector ring openings, the second ring of first sector ring openings includes four first sector ring openings, and the four first sector ring openings are respectively located in three groups of first sector ring openings. The second plane includes the second group of second sector ring openings, the second group of second sector ring openings includes two second sector ring openings, one second sector ring opening in the second group of second sector ring openings includes one radial baffle plate, the other second sector ring opening in the second group of second sector ring openings includes two radial baffle plates, and each second sector ring opening in the second group of second sector ring openings is configured to communicate with any first sector ring opening in the second ring of first sector ring openings.

In still another arrangement manner, the first plane includes the third ring of first sector ring openings, the third ring of first sector ring openings includes four first sector ring openings, and the four first sector ring openings are respectively located in three groups of first sector ring openings. The second plane includes the third group of second sector ring openings, the third group of second sector ring openings includes three second sector ring openings, two second sector ring openings in the third group of second sector ring openings each include two radial baffle plates, and each second sector ring opening in the third group of second sector ring openings is configured to communicate with any first sector ring opening in the third ring of first sector ring openings.

In yet another arrangement manner, the first plane includes the fourth ring of first sector ring openings, the fourth ring of first sector ring openings includes two first sector ring openings, and the two first sector ring openings are respectively located in two groups of first sector ring openings. The second plane includes the fourth group of second sector ring openings, the fourth group of second sector ring openings includes one second sector ring opening, the second sector ring opening in the fourth group of second sector ring openings includes two radial baffle plates, and each second sector ring opening in the fourth group of second sector ring openings is configured to communicate with any first sector ring opening in the fourth ring of first sector ring openings.

When the second valve body is specifically disposed, one end of at least one second internal channel has at least two third sector ring openings, and a liquid pipe that communicates with any one of the third sector ring openings communicates with the corresponding second internal channel. In this embodiment, different liquid pipes may communicate with the second internal channel, thereby enriching an application scenario of the multi-way valve.

When the multi-way valve in this embodiment of this application is specifically implemented, a specific structure is not limited. In a technical solution, the first valve body is a cylindrical valve body, the second valve body includes a first end cover, a second end cover, and a cylinder, the first end cover and the second end cover are connected to two ends of the cylinder, and the second internal channel is located at the first end cover. The first end cover, the second end cover, and the cylinder form a cylindrical mounting cavity through enclosure, the cylindrical valve body is mounted in the cylindrical mounting cavity, an outer surface of the cylindrical valve body is attached to the cylindrical mounting cavity, the first plane is attached to the second plane, and the first valve body rotates in the cylindrical mounting cavity when being driven by the driver. In this solution, the first valve body is assembled in the cylindrical mounting cavity formed by the second valve body, a sealing effect is relatively good, and leakage is not likely to occur.

According to a second aspect, this application further provides a vehicle. The vehicle includes a battery pack and the temperature control system in the first aspect. At least one liquid pipe in the temperature control system is attached to the battery pack in a thermally conductive manner. The battery pack is equivalent to a heat emitting device, and the liquid pipe is configured to transmit coolant to the battery pack, so that the temperature control system is configured to control a temperature of the battery pack. Leakage is not likely to occur in the temperature control system in the vehicle.

According to a third aspect, this application further provides an energy storage system. The energy storage system includes a battery pack and the temperature control system in the first aspect. At least one liquid pipe in the temperature control system is attached to the battery pack in a thermally conductive manner. The battery pack is equivalent to a heat emitting device, and the liquid pipe is configured to transmit coolant to the battery pack, so that the temperature control system is configured to control a temperature of the battery pack. Leakage is not likely to occur in the temperature control system in the energy storage system.

According to a fourth aspect, this application further provides a multi-way valve. The multi-way valve includes a first valve body and a second valve body. The first valve body includes a first plane, the second valve body includes a second plane, the first plane and the second plane are parallel and attached to each other, and a plurality of liquid pipes are respectively configured to transmit coolant to one or more heat emitting devices. A driver is configured to drive, based on a temperature of one or more liquid pipes or the heat emitting device, the first plane and the second plane to rotate relative to each other around a rotation axis of the multi-way valve. The first plane includes a plurality of groups of first sector ring openings, each group of first sector ring openings includes two first sector ring openings that are spaced apart, the plurality of first sector ring openings are divided into a plurality of rings by using the rotation axis as a circle center and are spaced apart, and the two first sector ring openings in each group of first sector ring openings communicate with each other by using an internal channel of the first valve body. The second plane includes a plurality of groups of second sector ring openings, each group of second sector ring openings includes a plurality of second sector ring openings that are spaced apart, each group of second sector ring openings is arranged in an annular manner by using the rotation axis as a circle center, and each second sector ring opening is configured to communicate with at least one first sector ring opening and connect to at least one liquid pipe by using an internal channel of the second valve body. In this technical solution, the first valve body and the second valve body cooperate with each other by using planes, and contact between the planes is relatively reliable, so that a leakage problem is not likely to occur. In addition, the first valve body and the second valve body each have an internal channel, leakage is not likely to occur in the internal channel, and a problem of cross-flow leakage is not likely to occur between channels, so that a leakage probability of the multi-way valve is further reduced.

### BRIEF DESCRIPTION OF DRAWINGS

FIG. 1(a) and FIG. 1(b) are topology diagrams of a temperature control system according to an embodiment of this application;
FIG. 2 is a diagram of a structure of a multi-way valve according to an embodiment of this application;
FIG. 3 is a diagram of a structure of a first valve body according to an embodiment of this application;
FIG. 4 is a schematic top view of a structure of a first valve body according to an embodiment of this application;
FIG. 5 is a schematic sectional view of a structure of a second valve body according to an embodiment of this application;
FIG. 6 is a schematic top view of a structure of a second valve body according to an embodiment of this application;
FIG. 7 is a diagram of a structure of a multi-way valve according to an embodiment of this application;
FIG. 8 is a diagram of a structure of a second valve body according to an embodiment of this application;
FIG. 9 is a diagram of a structure of a first plane according to an embodiment of this application;
FIG. 10 is a diagram of a structure of a second plane according to an embodiment of this application;
FIG. 11 is a schematic sectional view of a partial structure of a second valve body according to an embodiment of this application;
FIG. 12 is a schematic sectional view of a partial structure of a first valve body according to an embodiment of this application; and
FIG. 13(a) to FIG. 13(d) are diagrams of cooperation between a first plane and a second plane according to an embodiment of this application.

Reference numerals:
100: battery pack; 200: load; 300: heat exchange loop; 400: temperature rising loop;
500: first temperature lowering loop; 600: second temperature lowering loop; 700: battery pack temperature control loop;
800: load temperature control loop; 900: multi-way valve; 1: first valve body; 11: first plane;
111: first sector ring opening; 112: first internal channel; 12: circumferential baffle plate;
2: second valve body; 21: second plane; 211: second sector ring opening; 212: second internal channel;
213: third sector ring opening; 22: first end cover; 23: second end cover; 24: cylinder; and
25: radial baffle plate.

### DESCRIPTION OF EMBODIMENTS

To make the objectives, technical solutions, and advantages of this application clearer, the following further describes this application in detail with reference to accompanying drawings. However, example implementations may be implemented in a plurality of forms and should not be construed as being limited to implementations described herein. On the contrary, these implementations are provided such that this application is more comprehensive and complete and fully conveys the concept of the example implementations to a person skilled in the art. Identical reference numerals in the accompanying drawings denote identical or similar structures. Therefore, repeated description thereof is omitted. Expressions of positions and directions in this application are described by using the accompanying drawings as an example. However, changes may also be made as required, and all the changes fall within the protection scope of this application. The accompanying drawings in this application are merely used to illustrate relative position relationships and do not represent an actual scale.

Terms used in the following embodiments are merely intended to describe specific embodiments, but are not intended to limit this application. Terms "one", "a", "the foregoing", "the", and "the one" of singular forms used in this specification and the appended claims of this application are also intended to include plural forms like "one or more", unless otherwise specified in the context clearly. It should be further understood that in the following embodiments of this application, "at least one" and "one or more" mean one, two, or more.

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In addition, descriptions of "first", "second", "third", and the like in embodiments of this application are merely intended to distinguish between different specific structures, and the structures may have a same feature.

It should be noted that specific details are set forth in the following description for ease of fully understanding this application. However, this application can be implemented in a plurality of manners different from those described herein, and a person skilled in the art can perform similar promotion without departing from the connotation of this application. Therefore, this application is not limited to the following disclosed specific implementations. The following descriptions of this specification are example implementations of this application. However, the descriptions are intended to describe the general principle of this application, and are not intended to limit the scope of this application. The protection scope of this application shall be defined by the appended claims.

To facilitate understanding of a temperature control system, a vehicle, an energy storage system, and a multi-way valve that are provided in embodiments of this application, the following describes application scenarios of the temperature control system, the vehicle, the energy storage system, and the multi-way valve. The temperature control system may be specifically a liquid cooling system, a heating system, a hydraulic system, or the like. In short, the temperature control system includes a plurality of liquid pipes, flow distribution, convergence, and the like of liquid are performed between the plurality of liquid pipes, and the pipes need to adjust liquid flowing. For example, the temperature control system in embodiments of this application may be used for a temperature control system of a vehicle or a temperature control system of an energy storage system. Specifically, the temperature control system of the vehicle may be configured to control a temperature of a battery pack of the vehicle, and the temperature control system of the energy storage system may be configured to control a temperature of a battery pack of the energy storage system. In addition, the temperature control system may also be applied to an electronic device such as a computer room or a server. In a conventional technology, a valve group including a plurality of three-way valves may be disposed to implement a temperature control system. However, this solution leads to a relatively complex control process, a relatively large quantity of connected components, and a relatively high leakage risk. In addition, the valve group of the temperature control system is large in size and occupies more space.

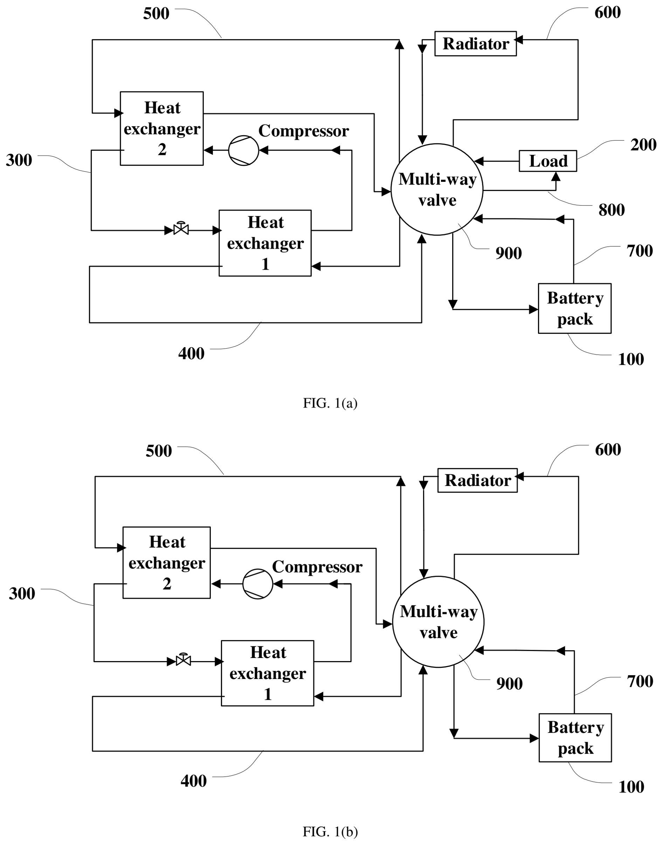

FIG. 1(a) and FIG. 1(b) are two topology diagrams of a temperature control system according to an embodiment of this application. The temperature control system includes a driver, a plurality of liquid pipes, and a multi-way valve 900. The liquid pipes communicate with the multi-way valve 900. There is a battery pack 100 on at least one liquid pipe. In this case, at least one liquid pipe in the plurality of liquid pipes is attached to the battery pack in a thermally conductive manner, so that the temperature control system is configured to control a temperature of the battery pack. Specifically, the temperature control system may dissipate heat of or heat the battery pack based on an actual working environment, so that the battery pack works under a proper temperature condition.

As shown in FIG. 1(a), in a specific embodiment, the liquid pipes of the temperature control system include a heat exchange loop 300, a temperature rising loop 400, a first temperature lowering loop 500, a second temperature lowering loop 600, a battery pack temperature control loop 700, and a load temperature control loop 800. There is a heat exchanger on at least one liquid pipe, and the heat exchanger is specifically located on the heat exchange loop 300 that includes a compressor. The temperature control system may be further configured to control a temperature of a load 200, and the multi-way valve 900 in this embodiment is a ten-way valve. The temperature control system includes the heat exchange loop 300, the temperature rising loop 400, the first temperature lowering loop 500, the second temperature lowering loop 600, the battery pack temperature control loop 700, and the load temperature control loop 800. The temperature rising loop 400 and the first temperature lowering loop 500 are separately connected to the heat exchange loop 300 for heat exchange. For example, the temperature rising loop 400 exchanges heat with the heat exchange loop 300 by using a heat exchanger, and the first temperature lowering loop 500 exchanges heat with the heat exchange loop 300 by using another heat exchanger. The battery pack temperature control loop 700 is connected to the battery pack 100 in a thermally conductive manner, and is configured to control a temperature of the battery pack 100. The load temperature control loop 800 is connected to the load 200 in a thermally conductive manner, and is configured to control the temperature of the load 200. The first temperature lowering loop 500, the second temperature lowering loop 600, the battery pack temperature control loop 700, and the load temperature control loop 800 are respectively connected to valve ports of the multi-way valve 900, and the driver drives the multi-way valve 900 to rotate, so that the multi-way valve 900 can be controlled based on an actual application scenario, thereby enabling different loops to communicate, and enabling the temperature control system to be in different working modes.

As shown in FIG. 1(b), in another specific embodiment, the multi-way valve 900 is an eight-way valve. A difference between this embodiment and the embodiment shown in FIG. 1(a) only lies in that the load 200 and the load temperature control loop 800 are not included.

This application further provides a vehicle. The foregoing temperature control system may be a temperature control system of the vehicle. Specifically, the vehicle includes at least a battery pack and the foregoing temperature control system. The battery pack is equivalent to a heat emitting device of the vehicle, and at least one liquid pipe in the temperature control system is attached to the battery pack in a thermally conductive manner, and is configured to control a temperature of the battery pack of the vehicle.

In addition, this application further provides an energy storage system. The foregoing temperature control system may also be a temperature control system of the energy storage system. The energy storage system includes at least a battery pack and the foregoing temperature control system. The battery pack is equivalent to a heat emitting device of the energy storage system, and at least one liquid pipe in the temperature control system is attached to the battery pack in a thermally conductive manner, and is configured to control a temperature of the battery pack of the energy storage system.

In embodiments of this application, "configured to" means a capability of a structure, which is different from an actual connection relationship. For example, "A is configured to perform B" means that A has a related capability and can perform a function of B. However, actually, in a scenario or various scenarios, A may alternatively not implement the function of B.

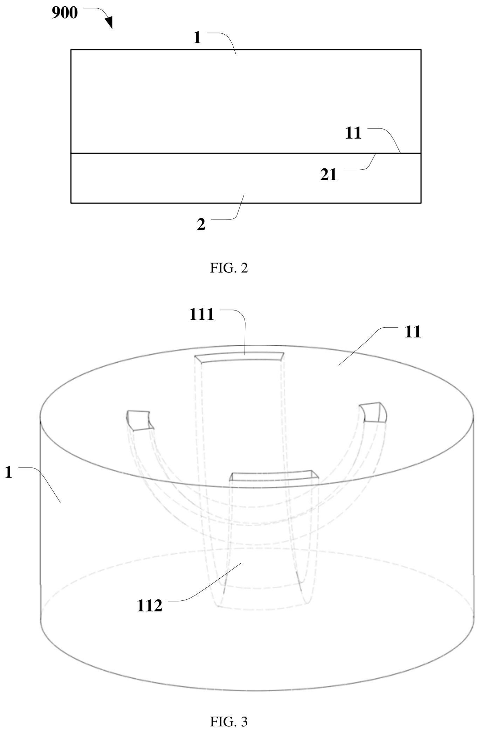

FIG. 2 is a diagram of a structure of a multi-way valve according to an embodiment of this application. As shown in FIG. 2, a multi-way valve 900 includes a first valve body 1 and a second valve body 2. The first valve body 1 includes a first plane 11, and the second valve body 2 includes a second plane 21. When the first valve body 1 and the second valve body 2 are being assembled, the first valve body 1 and the second valve body are mounted by being rotated relative to each other around a rotation axis, and the first plane 11 and the second plane 21 are enabled to be parallel and attached to each other. In this solution, the first valve body 1 and the second valve body 2 of the multi-way valve 900 cooperate with each other by using planes, and contact between the planes is relatively reliable, so that a leakage problem is not likely to occur.

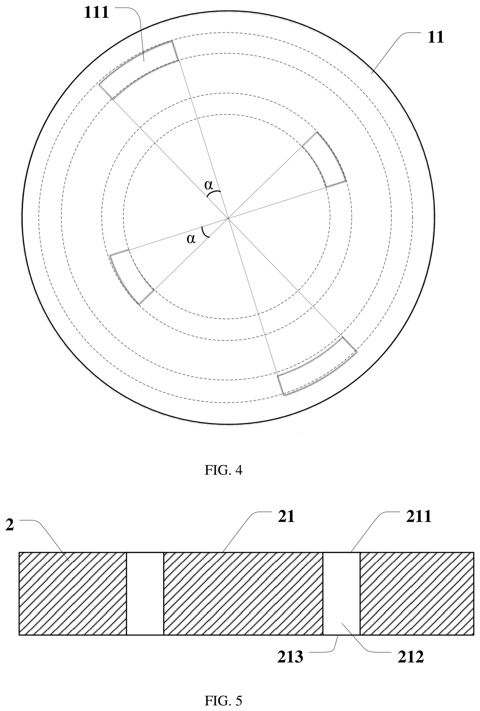

FIG. 3 is a diagram of a structure of a first valve body according to an embodiment of this application. FIG. 4 is a schematic top view of a structure of a first valve body according to an embodiment of this application. As shown in FIG. 3 and FIG. 4, a first plane 11 of a first valve body 1 includes a plurality of groups of first sector ring openings 111, each group of first sector ring openings 111 includes two first sector ring openings 111 that are spaced apart, the plurality of first sector ring openings 111 are divided into a plurality of rings by using a rotation axis as a circle center and are spaced apart, and the two first sector ring openings 111 in each group of first sector ring openings 111 communicate with each other by using an internal channel of the first valve body 1. For ease of description, in the following embodiments, the internal channel of the first valve body 1 is referred to as a first internal channel 112. The first valve body 1 includes a plurality of first internal channels 112, and ports on two sides of the first internal channel 112 are respectively first sector ring openings 111. Each first sector ring opening 111 is located on the first plane 11. First sector ring openings 111 that communicate with each other by using each first internal channel 112 are one group of first sector ring openings 111. In an embodiment, a first sector ring opening 111 at one end of the first internal channel 112 is located on the first plane 11, a first sector ring opening 111 at the other end of the first internal channel 112 is also located on the first plane 11, and first sector ring openings 111 at two ends of each first internal channel 112 communicate with each other by using the first internal channel 112. The plurality of first sector ring openings 111 are arranged in different circular rings that use the rotation axis as a circle center on the first plane 11. In the embodiments shown in FIG. 3 and FIG. 4, the first plane 11 includes two circular rings, and an inner diameter of one of the two circular rings is greater than an outer diameter of the other circular ring, so that the two circular rings do not overlap in a radial direction. Two first sector ring openings 111 are disposed in each circular ring.

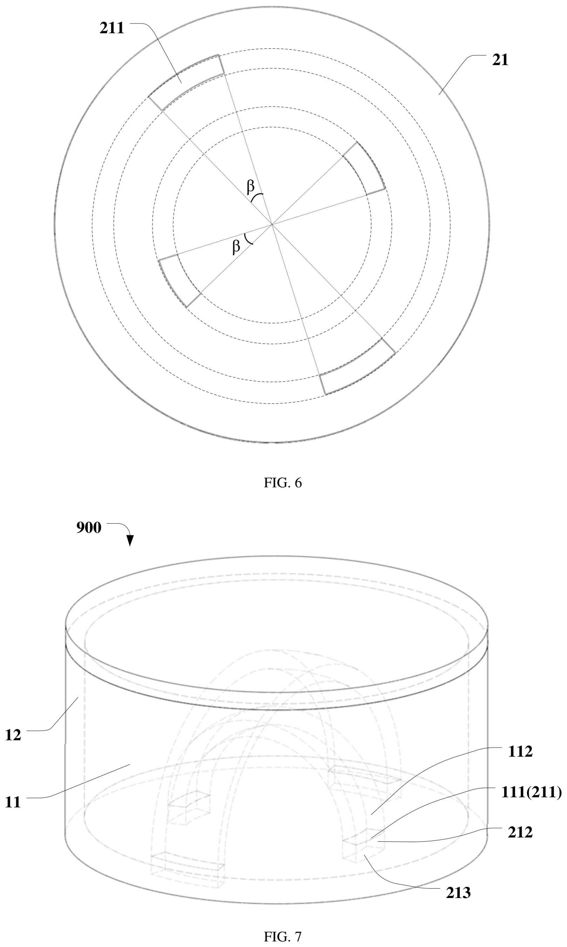

FIG. 5 is a schematic sectional view of a structure of a second valve body according to an embodiment of this application. FIG. 6 is a schematic top view of a structure of a second valve body according to an embodiment of this application. As shown in FIG. 5 and FIG. 6, a second plane 21 of a second valve body 2 includes a plurality of groups of second sector ring openings 211, each group of second sector ring openings 211 includes a plurality of second sector ring openings 211 that are spaced apart, and each group of second sector ring openings 211 is arranged in an annular manner by using a rotation axis as a circle center. The second valve body 2 includes a plurality of internal channels. For ease of description, in the following embodiments, the internal channel of the second valve body 2 is referred to as a second internal channel 212. A port at one end of the second internal channel 212 is a second sector ring opening 211, and the second sector ring opening 211 is located on the second plane 21. A port at the other end of the second internal channel 212 is a third sector ring opening 213, and the third sector ring opening 213 is located on a side that is of the second valve body 2 and that is away from the second plane 21. In an embodiment, a port at one end of the second internal channel 212 is a second sector ring opening 211, a port at the other end is a third sector ring opening 213, and the second sector ring opening 211 and the third sector ring opening 213 communicate with each other by using the second internal channel 212. Each second sector ring opening 211 is configured to connect to at least one liquid pipe by using the second internal channel 212. Specifically, the third sector ring opening 213 is connected to at least one liquid pipe, so that the second sector ring opening is connected to the at least one liquid pipe by using the second internal channel 212, and the liquid pipe communicates with the second internal channel 212. In a specific embodiment, second sector ring openings 211 located in a same circular ring are one group of second sector ring openings 211. In the embodiment shown in FIG. 5, the second surface includes two circular rings, two second sector ring openings 211 are disposed in each circular ring, and the two second sector ring openings 211 are one group. Therefore, in the specific embodiment shown in FIG. 5, a multi-way valve includes two groups of second sector ring openings 211, each group of second sector ring openings includes two second sector ring openings 211, and the two second sector ring openings 211 are spaced apart.

In a specific embodiment, one end of at least one second internal channel 212 has at least two third sector ring openings 213. A liquid pipe that communicates with any one of the third sector ring openings 213 communicates with the corresponding second internal channel 212. That is, one second internal channel 212 may communicate with one, two, or more liquid pipes.

FIG. 7 is a diagram of a structure of a multi-way valve according to an embodiment of this application. As shown in FIG. 7, in a specific embodiment, when a first valve body 1 and a second valve body 2 of the multi-way valve are being assembled, a first plane 11 and a second plane 21 are enabled to be parallel and attached to each other, to implement sealing of the first valve body 1 and the second valve body 2 on a plane. Each second sector ring opening 211 is configured to communicate with at least one first sector ring opening 111, each first internal channel 112 is configured to communicate with two or more second internal channels 212, and the second internal channels 212 communicate with liquid pipes. Therefore, by adjusting a relative position between the first valve body 1 and the second valve body 2, the second sector ring opening 211 may be enabled to communicate with different first sector ring openings 111, thereby implementing communication adjustment of different liquid pipes.

A driver is configured to drive, based on a temperature of one or more liquid pipes or a heat emitting device, the first plane 11 and the second plane 21 to rotate relative to each other around a rotation axis of the multi-way valve, to adjust a temperature control solution of a temperature control system. In an embodiment, the second valve body 2 may be relatively fixed, and the driver is connected to the first valve body 1, and is configured to drive the first valve body 1 to rotate relative to the second valve body 2 around the rotation axis. Because a third sector ring opening 213 of the second valve body 2 is connected to a liquid pipe, it is relatively convenient to drive the first valve body 1 to rotate. A circular ring in which a plurality of first sector ring openings 111 are located is the same as a circular ring in which the second sector ring opening 211 is located. For example, in the embodiments shown in FIG. 3 to FIG. 7, the first sector ring openings 111 are arranged in two circular rings on the first plane 11, and the second sector ring openings 211 are arranged in two circular rings on the second plane 21. The two circular rings in which the first sector ring openings 111 are arranged are the same as the two circular rings in which the second sector ring openings 211 are arranged. Therefore, each second sector ring opening 211 communicates with different first sector ring openings 111 located in a same circular ring.

In this embodiment of this application, the first internal channel 112 located in the first valve body 1 and the second internal channel 212 located in the second valve body 2 are used to form a runner. Leakage is not likely to occur in the first internal channel 112 and the second internal channel 212, and a problem of cross-flow leakage is not likely to occur between channels. Therefore, no additional sealing structure is required between the first internal channels 112 and between the second internal channels 212, and a leakage probability of the multi-way valve is further reduced. The first valve body 1 and the second valve body 2 come into contact with each other to implement sealing by using the first plane 11 and the second plane 21, and a contact area is relatively small. Therefore, when the relative position between the first valve body 1 and the second valve body 2 is adjusted, friction between the first plane 11 and the second plane 21 is relatively small, and a power requirement for a driving apparatus is relatively low, thereby helping reduce energy consumption of the multi-way valve.

In a specific embodiment, materials of the first valve body 1 and the second valve body 2 may be metal or plastic, and the first valve body 1 and the second valve body 2 may be formed through injection molding or casting.

Refer to FIG. 4 and FIG. 6. In an embodiment, a central angle α of each first sector ring opening 111 is equal to a preset angle value, and a central angle β of each second sector ring opening 211 is equal to the preset angle value. In this embodiment, the driver drives the first valve body 1 and the second valve body 2 to rotate relative to each other around the rotation axis, and specifically drives the first valve body 1 to rotate around the rotation axis by the preset angle value or an integer multiple of the preset angle value, so that the first sector ring opening 111 communicates with different second sector ring openings 211, and at least one first internal channel 112 communicates with different second internal channels 212.

In an embodiment, when the first valve body 1 rotates relative to the second valve body 2 around the rotation axis by the preset angle value or an integer multiple of the preset angle value, a plane between first sector ring openings 111 on the first plane 11 and a plane between second sector ring openings 211 on the second plane 21 come into contact with each other, to form a sealing structure, thereby ensuring sealing performance of the multi-way valve.

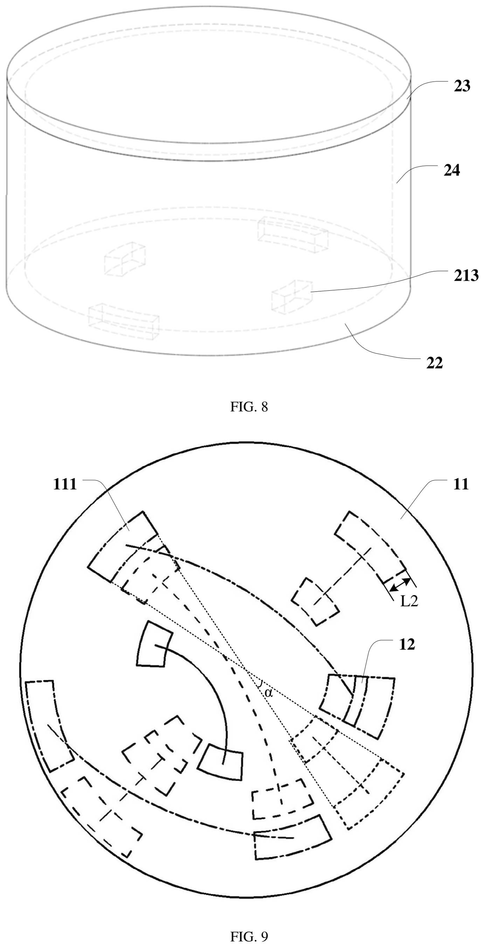

FIG. 8 is a diagram of a structure of a second valve body according to an embodiment of this application. With reference to FIG. 7 and FIG. 8, in a specific embodiment, the first valve body 1 is a cylindrical valve body, and the second valve body 2 includes a first end cover 22, a second end cover 23, and a cylinder 24. The first end cover 22 and the second end cover 23 are connected to two ends of the cylinder 24, and the second internal channel 212 is located at the first end cover 22. The first end cover 22, the second end cover 23, and the cylinder 24 form a cylindrical mounting cavity through enclosure, the cylindrical valve body is mounted in the cylindrical mounting cavity, an outer surface of the cylindrical valve body is attached to the cylindrical mounting cavity, and the first plane 11 is attached to the second plane 21. In this embodiment, the first valve body 1 rotates in the cylindrical mounting cavity when being driven by the driver. The second valve body 2 forms the cylindrical mounting cavity, which may be used as a sealing structure of the multi-way valve, so that the first plane 11 is attached to the second plane 21 and no leakage occurs. In this solution, the multi-way valve implements sealing with no need to cooperate with another mechanical part, and a sealing effect is relatively good. When the multi-way valve is being assembled, it is only necessary to connect the second valve body 2 to a liquid pipe, and the assembly is relatively simple.

When the foregoing solution is specifically implemented, the first end cover 22 and the cylinder 24 may be an integrated structure. In this solution, there is no connection gap between the first end cover 22 and the cylinder 24, so that a structure that is of the second valve body 2 and that needs to be assembled and sealed is reduced, assembly is simple, and a leakage risk is reduced.

In a specific embodiment, the first internal channels are staggered in the first valve body 1, but do not communicate with each other. In addition, in an embodiment, areas of different first sector ring openings 111 on the first plane 11 are the same, thereby helping reduce flow resistance of liquid. In addition, areas of different second sector ring openings 211 on the second plane 21 are also the same. Areas of different third sector ring openings 213 of the second valve body 2 are the same, and this not only reduces flow resistance, but also helps mark an external interface of the multi-way valve. In addition, in an embodiment, areas of the first sector ring opening 111, the second sector ring opening 211, and the third sector ring opening 213 are the same.

It should be noted that "a plurality of" mentioned in embodiments of this application means at least two, that is, two or more.

In the foregoing embodiments, some content of the technical solutions of this application is described by using a two-position four-way valve as an example. To make details of the solutions clearer, the following describes some content of the technical solutions of this application by using a four-position ten-way valve as an example.

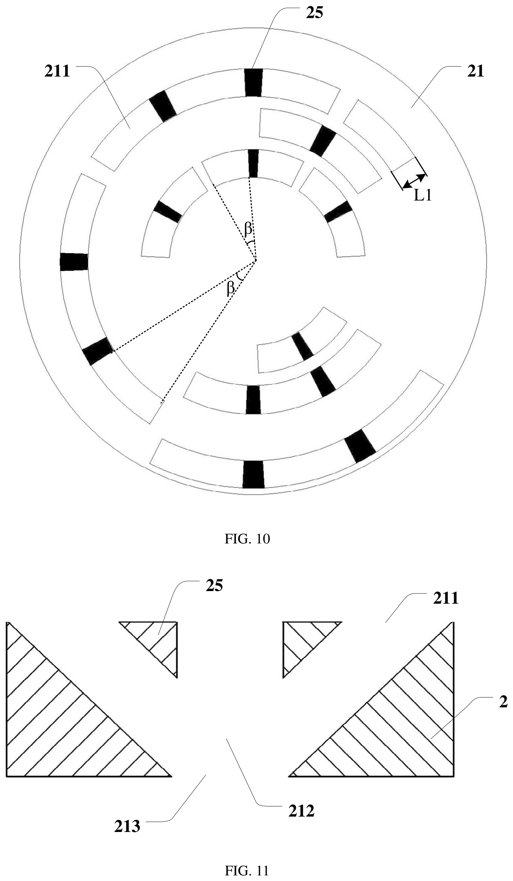

FIG. 9 is a diagram of a structure of a first plane according to an embodiment of this application. As shown in FIG. 9, the first plane 11 includes seven groups of first sector ring openings 111, and the groups of first sector ring openings 111 are respectively represented by using different line shapes. In addition, each group of first sector ring openings 111 implements communication by using a first internal runner. In this embodiment, the plurality of first sector ring openings 111 are distributed in four different circular rings. FIG. 10 is a diagram of a structure of a second plane according to an embodiment of this application. As shown in FIG. 10, the second plane 21 includes four groups of second sector ring openings 211, and each group of second sector ring openings 211 is arranged in one circular ring. Therefore, the plurality of second sector ring openings 211 on the second plane 21 are arranged in four circular rings. The four circular rings of the second plane 21 are the same as the four circular rings of the first plane 11. Therefore, second sector ring openings 211 located in a same circular ring may communicate with any first sector ring opening 111 located in the same circular ring.

Refer to FIG. 9. A central angle α of each first sector ring opening 111 is equal to a preset angle value. FIG. 11 is a schematic sectional view of a partial structure of a second valve body according to an embodiment of this application. With reference to FIG. 10 and FIG. 11, in an embodiment, at least one second sector ring opening 211 in each group of second sector ring openings 211 includes one or more radial baffle plates 25, and the at least one second sector ring opening 211 is divided into at least two sections of sector ring openings by the radial baffle plate 25. Specifically, the radial baffle plate 25 extends along a radial direction, and divides the second sector ring opening 211 into at least two sections of sector ring openings along a circumferential direction. In the embodiment shown in FIG. 11, the radial baffle plate divides one second sector ring opening 211 into three sections of sector ring openings. At least two sections of sector ring openings obtained by dividing a same second sector ring opening 211 communicate with a same second internal runner, and a central angle β of each section of sector ring opening is equal to the preset angle value. In actual working, a section of sector ring opening of the second sector ring opening 211 is configured to communicate with a first sector ring opening 111, and both the central angle α and the central angle β are the preset angle value. Therefore, the central angle α is equal to the central angle β. When the first sector ring opening 111 is enabled to communicate with a section of sector ring opening of the second sector ring opening 211, the first sector ring opening 111 may be enabled to match the section of sector ring opening of the second sector ring opening 211, so that the first sector ring opening 111 reliably communicates with the second sector ring opening 211.

When a driver drives a first valve body 1 and a second valve body 2 to rotate relative to each other around a rotation axis, the driver drives the first valve body 1 to rotate around the rotation axis by the preset angle value or an integer multiple of the preset angle value, so that the first sector ring opening 111 may communicate with sections of sector ring openings of different second sector ring openings 211, and at least one first internal channel 112 may communicate with different second internal channels 212. In this solution, the driver is used to drive the first valve body 1 to rotate, thereby helping implement automatic adjustment. In addition, when the first valve body 1 and the second valve body 2 are driven to rotate relative to each other around the rotation axis, the first valve body 1 and the second valve body 2 may rotate by the preset angle value each time, or the first valve body 1 and the second valve body 2 may be driven to rotate relative to each other by using the preset angle value as a step, thereby helping simplify a control process of a multi-way valve.

When the radial baffle plate 25 is specifically disposed, each radial baffle plate 25 is fastened to the second sector ring opening 211 along a radial direction of the second sector ring opening 211. A specific fastening manner of the radial baffle plate 25 is not limited. For example, the radial baffle plate 25 and the second valve body 2 may be integrated, or the radial baffle plate 25 may be fastened to the second valve body 2 by using a welding or bonding process.

When the second sector ring opening 211 is divided into at least two sections of sector ring openings by the radial baffle plate 25, flow distribution or flow combination may be implemented. Alternatively, when the multi-way valve adjusts a working mode, that is, when the first valve body 1 is driven to rotate relative to the second valve body 2, the first internal channel 112 may still communicate with a same second internal channel 212 in different working modes.

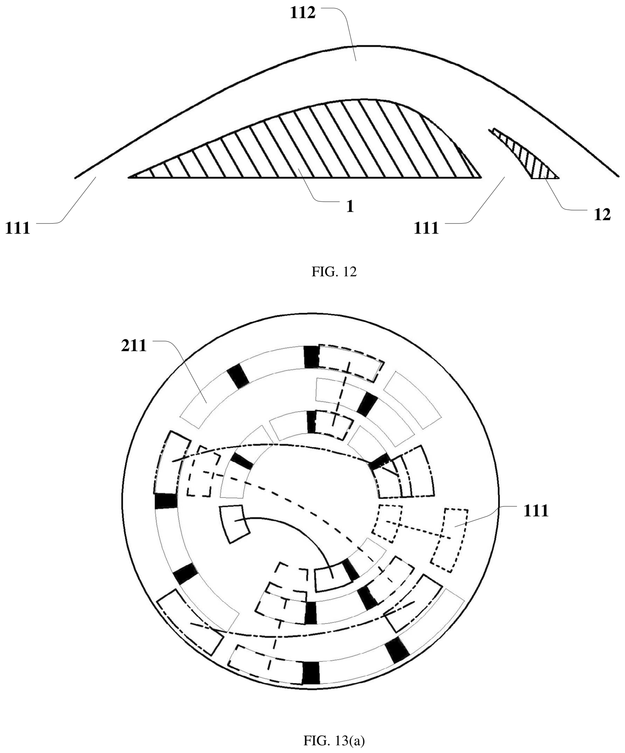

Still refer to FIG. 9 and FIG. 10. In an embodiment, a difference L1 between an inner diameter and an outer diameter of each second sector ring opening 211 is equal to a preset length value. FIG. 12 is a schematic sectional view of a partial structure of a first valve body according to an embodiment of this application. With reference to FIG. 9 and FIG. 12, one first sector ring opening 111 in at least one group of first sector ring openings 111 includes one circumferential baffle plate 12, and the circumferential baffle plate 12 is configured to divide the second sector ring opening 211 into two layers of sector ring openings. Specifically, the circumferential baffle plate 12 extends along a circumferential direction, and divides the first sector ring opening 111 into at least two layers of sector ring openings along a radial direction. The two layers of sector ring openings obtained through division communicate with a same first internal runner, the second sector ring opening 211 communicates with any layer of sector ring opening of the first sector ring opening 111, and both the second sector ring opening 211 and the any layer of sector ring opening of the first sector ring opening 111 communicate with the same first internal runner. A difference L2 between an inner diameter and an outer diameter of each layer of sector ring opening is equal to the preset length value. When the second sector ring opening 211 is enabled to communicate with a layer of sector ring opening of the first sector ring opening 111, the second sector ring opening 211 may be enabled to match the layer of sector ring opening of the first sector ring opening 111, so that the first sector ring opening 111 reliably communicates with the second sector ring opening 211.

When the circumferential baffle plate 12 is specifically disposed, each circumferential baffle plate 12 is fastened to the first sector ring opening 111 along a circumferential direction of the first sector ring opening 111. A specific fastening manner of the circumferential baffle plate 12 is not limited. For example, the circumferential baffle plate 12 and the first valve body 1 may be integrated, or the circumferential baffle plate 12 may be fastened to the first valve body 1 by using a welding or bonding process.

When the first sector ring opening 111 is divided into at least two layers of sector ring openings by the circumferential baffle plate 12, flow distribution or flow combination may be implemented. Alternatively, when the multi-way valve adjusts the working mode, that is, when the first valve body 1 is driven to rotate relative to the second valve body 2, the second internal channel 212 may still communicate with a same first internal channel 112 in different working modes.

Refer to FIG. 9 and FIG. 10. It may be considered that the first plane 11 is divided into a plurality of first sector regions that use the rotation axis as a circle center, and each first sector ring opening 111 is located in a first sector region, but is not located in two or more first sector regions at the same time. There is a first separation region between adjacent first sector regions, and the first separation region separates first sector ring openings 111 that are adjacent to each other along the circumferential direction. Similarly, it may be considered that the second plane 21 is divided into a plurality of second sector regions that use the rotation axis as a circle center, and a sector ring opening obtained by dividing each second sector ring opening 211 by the radial baffle plate 25 is located in a second sector region, but is not located in two or more second sector regions at the same time. There is a second separation region between adjacent second sector regions, and the second separation region separates different sections of sector ring openings that are adjacent to each other along the circumferential direction. Central angles of the first sector region and the second sector region are the same, and may be specifically the preset angle value. Each time the first valve body 1 rotates, the first separation region and the second separation region come into contact with each other, to form a sealing structure.

It should be noted that both the circular ring and the sector region mentioned in this embodiment of this application are virtual structures, and actually, there is no corresponding structure.

Still refer to FIG. 9. In a specific embodiment, the first plane includes a plurality of rings of first sector ring openings 111, each ring of first sector ring openings 111 is arranged in one circular ring, and the plurality of rings of first sector ring openings 111 are sequentially arranged along a direction away from the rotation axis. In other words, distances between each ring of first sector ring openings 111 and the rotation axis are the same, and distances between different rings of first sector ring openings 111 and the rotation axis are different.

Still refer to FIG. 10. In a specific embodiment, the second plane includes a plurality of groups of second sector ring openings 211, and the plurality of groups of second sector ring openings 211 are sequentially arranged along the direction away from the rotation axis. Each group of second sector ring openings 211 is arranged around the rotation axis of the first plane 11 or the second plane 21, and distances between the groups of second sector ring openings 211 and the rotation axis of the first plane 11 or the second plane 21 are different. Distances between second sector ring openings 211 in each group of second sector ring openings 211 and the rotation axis of the first plane 11 or the second plane 21 are the same. In other words, each group of second sector ring openings 211 is located in a same circular ring that uses the rotation axis as a circle center, and the groups of second sector ring openings 211 are located in different circular rings.

Each ring of first sector ring openings 111 is located in a same circular ring, and each group of second sector ring openings 211 is located in a same circular ring. Circular rings in which the plurality of groups of second sector ring openings 211 are located are in a one-to-one correspondence with circular rings in which the plurality of rings of first sector ring openings 111 are located. Each second sector ring opening 211 is configured to communicate with a first sector ring opening 111 located in a same circular ring. The following lists a specific embodiment for description.

In the foregoing embodiment, a distance between a sector ring opening and the rotation axis may be considered as a distance between an inner edge that is of each sector ring opening and that is close to the rotation axis and the rotation axis, or a distance between an outer edge that is of each sector ring opening and that is away from the rotation axis and the rotation axis. In short, when the foregoing distances of different sector ring openings are compared, a unified standard should be used. For example, a distance between an inner edge that is of a sector ring opening and that is close to the rotation axis and the rotation axis should not be compared with a distance between an outer edge that is of another sector ring opening and that is away from the rotation axis and the rotation axis.

In a specific embodiment, with reference to FIG. 9 and FIG. 10, the plurality of rings of first sector ring openings 111 of the first plane include a first ring of first sector ring openings 111, a second ring of first sector ring openings 111, a third ring of sector ring openings, and a fourth ring of sector ring openings that are sequentially arranged along the direction away from the rotation axis. The plurality of groups of second sector ring openings 211 of the second plane include a first group of second sector ring openings 211, a second group of second sector ring openings 211, a third group of second sector ring openings 211, and a fourth group of second sector ring openings 211 that are sequentially arranged along the direction away from the rotation axis.

FIG. 13(a) to FIG. 13(d) are diagrams of cooperation between a first plane and a second plane according to an embodiment of this application. With reference to FIG. 9, FIG. 10, and FIG. 13(a) to FIG. 13(d), the first ring of first sector ring openings 111 and the first group of second sector ring openings 211 are located in a same circular ring, the second ring of first sector ring openings 111 and the second group of second sector ring openings 211 are located in a same circular ring, the third ring of first sector ring openings 111 and the third group of second sector ring openings 211 are located in a same circular ring, and the fourth ring of first sector ring openings 111 and the fourth group of second sector ring openings 211 are located in a same circular ring. A first sector ring opening 111 and a second sector ring opening 211 that are located in a same circular ring may communicate with each other. The following describes the four rings of first sector ring openings 111 and the four groups of second sector ring openings 211 in sequence.

The first group of second sector ring openings 211 is closest to the rotation axis relative to the other groups of second sector ring openings 211, and is located in a smallest circular ring. The first group of second sector ring openings 211 includes four second sector ring openings 211, each second sector ring opening 211 in the first group of second sector ring openings 211 includes one radial baffle plate 25, and each second sector ring opening 211 includes two sections of sector ring openings. The first ring of first sector ring openings 111 and the first group of second sector ring openings 211 are located in a same circular ring, the first ring of first sector ring openings 111 includes six first sector ring openings 111, and the six first sector ring openings 111 are respectively located in five groups of first sector ring openings 111. Each second sector ring opening 211 in the first group of second sector ring openings 211 is configured to communicate with any first sector ring opening 111 in the first ring of first sector ring openings 111.

The second group of second sector ring openings 211 is located on an outer circumferential side of the first group of second sector ring openings 211, and is adjacent to the first group of second sector ring openings 211 along the radial direction. A distance between each second sector ring opening 211 in the second group of second sector ring openings 211 and the rotation axis is greater than a distance between each second sector ring opening 211 in the first group of second sector ring openings 211 and the rotation axis. The second group of second sector ring openings 211 includes two second sector ring openings 211, one second sector ring opening 211 in the second group of second sector ring openings 211 includes one radial baffle plate 25, and the second sector ring opening 211 includes two sections of sector ring openings; and the other second sector ring opening 211 in the second group of second sector ring openings 211 includes two radial baffle plates 25, and the second sector ring opening 211 includes three sections of sector ring openings. The second ring of first sector ring openings 111 and the second group of second sector ring openings 211 are located in a same circular ring, the second ring of first sector ring openings 111 includes four first sector ring openings 111, and the four first sector ring openings 111 are respectively located in three groups of first sector ring openings 111. Each second sector ring opening 211 in the second group of second sector ring openings 211 is configured to communicate with any first sector ring opening 111 in the second ring of first sector ring openings 111.

The third group of second sector ring openings 211 is located on an outer circumferential side of the second group of second sector ring openings 211, and is adjacent to the second group of second sector ring openings 211 along the radial direction. A distance between each second sector ring opening 211 in the third group of second sector ring openings 211 and the rotation axis is greater than a distance between each second sector ring opening 211 in the second group of second sector ring openings 211 and the rotation axis. The third group of second sector ring openings 211 includes three second sector ring openings 211, two second sector ring openings 211 in the third group of second sector ring openings 211 each include two radial baffle plates 25, and the second sector ring opening 211 includes three sections of sector ring openings. The other second sector ring opening 211 in the third group of second sector ring openings 211 is not provided with a radial baffle plate 25, and is an independent sector ring opening. The third ring of first sector ring openings 111 and the third group of second sector ring openings 211 are located in a same circular ring, the third ring of first sector ring openings 111 includes four first sector ring openings 111, and the four first sector ring openings 111 are respectively located in three groups of first sector ring openings 111. Each second sector ring opening 211 in the third group of second sector ring openings 211 is configured to communicate with any first sector ring opening 111 in the third ring of first sector ring openings 111.

The fourth group of sector ring openings is located on an outer circumferential side of the third group of second sector ring openings 211, and is adjacent to the third group of second sector ring openings 211 along the radial direction. A distance between each second sector ring opening 211 in the fourth group of second sector ring openings 211 and the rotation axis is greater than a distance between each second sector ring opening 211 in the third group of second sector ring openings 211 and the rotation axis. The fourth group of second sector ring openings 211 includes one second sector ring opening 211, a third sector ring opening 213 in the fourth group of second sector ring openings 211 includes two radial baffle plates 25, and the second sector ring opening 211 includes three sections of sector ring openings. The fourth ring of first sector ring openings 111 and the fourth group of second sector ring openings 211 are located in a same circular ring, the fourth ring of first sector ring openings 111 includes two first sector ring openings 111, and the two first sector ring openings 111 are respectively located in two groups of first sector ring openings 111. Each second sector ring opening 211 in the fourth group of second sector ring openings 211 is configured to communicate with any first sector ring opening 111 in the fourth ring of first sector ring openings 111.

Still refer to FIG. 9, FIG. 10, and FIG. 13(a) to FIG. 13(d). The following lists a specific embodiment. The first plane and the second plane each are equally divided into twelve sector regions, which are respectively a first region, a second region, a third region, a fourth region, a fifth region, a sixth region, a seventh region, an eighth region, a ninth region, a tenth region, an eleventh region, and a twelfth region.

The first sector ring openings 111 on the first plane include a first opening, a second opening, a third opening, a fourth opening, a fifth opening, a sixth opening, a seventh opening, an eighth opening, a ninth opening, a tenth opening, an eleventh opening, a twelfth opening, a thirteenth opening, a fourteenth opening, a fifteenth opening, and a sixteenth opening. The first valve body includes seven first internal channels, which are respectively a first hole, a second hole, a third hole, a fourth hole, a fifth hole, a sixth hole, and a seventh hole. One end of the first hole is the first opening, and the other end is the fifth opening and the sixth opening. Two ends of the second hole are respectively the third opening and the fourth opening. Two ends of the third hole are respectively the seventh opening and the eighth opening. Two ends of the fourth hole are respectively the second opening and the ninth opening. Two ends of the fifth hole are respectively the eleventh opening and the sixteenth opening. One end of the seventh hole is the twelfth opening and the thirteenth opening, and the other end is the fourteenth opening.

The fourth opening, the fifth opening, the seventh opening, the eleventh opening, the twelfth opening, and the sixteenth opening are located in the first ring of first sector ring openings 111; the second opening, the sixth opening, the ninth opening, and the thirteenth opening are located in the second ring of first sector ring openings 111; the first opening, the third opening, the eighth opening, and the tenth opening are located in the third ring of first sector ring openings 111; and the fourteenth opening and the fifteenth opening are located in the fourth ring of first sector ring openings 111. The first opening and the second opening are located in the first region, the third opening and the fourth opening are located in the fourth region, the fifth opening and the sixth opening are located in the sixth region, the seventh opening and the eighth opening are located in the seventh region, the ninth opening and the tenth opening are located in the eighth region, the eleventh opening is located in the ninth region, the twelfth opening, the thirteenth opening, and the fourteenth opening are located in the tenth region, the fifteenth opening is located in the eleventh region, and the sixteenth opening is located in the twelfth region.

The second sector ring openings 211 on the second plane include a first port, a second port, a third port, a fourth port, a fifth port, a sixth port, a seventh port, an eighth port, a ninth port, a tenth port, an eleventh port, a twelfth port, a thirteenth port, a fourteenth port, a fifteenth port, a sixteenth port, a seventeenth port, an eighteenth port, a nineteenth port, a twentieth port, a twenty-first port, a twenty-second port, and a twenty-third port. The second valve body includes ten second internal channels, which are respectively a first hole channel, a second hole channel, a third hole channel, a fourth hole channel, a fifth hole channel, a sixth hole channel, a seventh hole channel, an eighth hole channel, a ninth hole channel, and a tenth hole channel. The first hole channel communicates with the first port, the second port, and the third port, the second hole channel communicates with the seventh port and the eighth port, the third hole channel communicates with the thirteenth port, the fourteenth port, and the fifteenth port, the fourth hole channel communicates with the sixteenth port, the seventeenth port, and the eighteenth port, the fifth hole channel communicates with the nineteenth port, the twentieth port, and the twenty-first port, the sixth hole channel communicates with the ninth port and the tenth port, the seventh hole channel communicates with the twenty-second port and the twenty-third port, the eighth hole channel communicates with the eleventh port and the twelfth port, the ninth hole channel communicates with the fifth port and the sixth port, and the tenth hole channel communicates with the fourth port.

The seventh port, the eighth port, the ninth port, the tenth port, the eleventh port, the twelfth port, the twenty-second port, and the twenty-third port are located in the first group of second sector ring openings 211; the fifth port, the sixth port, the thirteenth port, the fourteenth port, and the fifteenth port are located in the second group of second sector ring openings 211; the first port, the second port, the third port, the fourth port, the nineteenth port, the twentieth port, and the twenty-first port are located in the third group of second sector ring openings 211; and the sixteenth port, the seventeenth port, and the eighteenth port are located in the fourth group of second sector ring openings 211. The twenty-first port and the twenty-second port are located in the first region, the first port and the twenty-third port are located in the second region, the second port and the seventh port are located in the third region, the third port, the fifth port, and the eighth port are located in the fourth region, the fourth port, the sixth port, and the ninth port are located in the fifth region, the tenth port is located in the sixth region, the eleventh port, the thirteenth port, and the sixteenth port are located in the eighth region, the twelfth port, the fourteenth port, and the seventeenth port are located in the ninth region, the fifteenth port and the eighteenth port are located in the tenth region, the nineteenth port is located in the eleventh region, and the twentieth port is located in the twelfth region.

The multi-way valve has a plurality of working modes. As shown in FIG. 13(a), in a first working mode, the first region of the first plane is opposite to the first region of the second plane. In this case, the first opening communicates with the twenty-first port, and the fifth opening communicates with the tenth port, so that the fifth hole channel communicates with the sixth hole channel by using the first hole; the third opening communicates with the third port, and the fourth opening communicates with the eighth port, so that the first hole channel communicates with the second hole channel by using the second hole; the thirteenth opening communicates with the fifteenth port, and the fourteenth opening communicates with the eighteenth port, so that the third hole channel communicates with the fourth hole channel by using the seventh hole; and the third hole, the fourth hole, the fifth hole, and the sixth hole are all blocked (a first port at at least one end does not communicate with a second port).

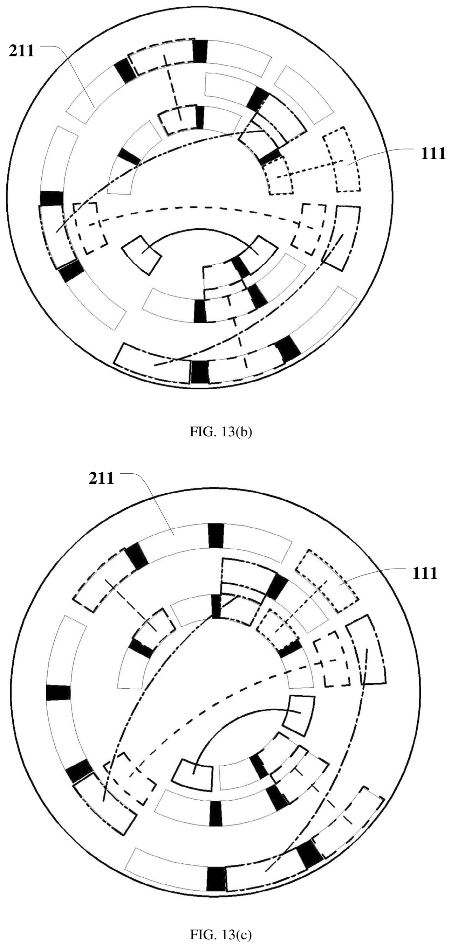

As shown in FIG. 13(b), in a second working mode, the first valve body rotates by a preset angle relative to the second valve body, and the first region of the first plane is opposite to the second region of the second plane. In this case, the first opening communicates with the twentieth port, the fifth opening communicates with the sixth port, and the sixth opening communicates with the sixth port, so that the fifth hole channel separately communicates with the sixth hole channel and the ninth hole channel by using the first hole; the third opening communicates with the second port, and the fourth opening communicates with the seventh port, so that the first hole channel communicates with the second hole channel by using the second hole; the twelfth opening communicates with the twelfth port, the thirteenth opening communicates with the fourteenth port, and the fourteenth opening communicates with the seventeenth port, so that the fourth hole channel separately communicates with the third hole channel and the eighth hole channel by using the seventh hole; and the third hole, the fourth hole, the fifth hole, and the sixth hole are all blocked.

As shown in FIG. 13(c), in a third working mode, compared with the second working mode, the first valve body rotates by the preset angle relative to the second valve body, and the first region of the first plane is opposite to the eleventh region of the second plane. In this case, the first opening communicates with the nineteenth port, the fifth opening communicates with the eighth port, and the sixth opening communicates with the fourth port, so that the fifth hole channel separately communicates with the second hole channel and the ninth hole channel by using the first hole; the third opening communicates with the first port, and the fourth opening communicates with the twenty-third port, so that the first hole channel communicates with the seventh hole channel by using the second hole; the seventh opening communicates with the ninth port, and the eighth opening communicates with the fourth port, so that the sixth hole channel communicates with the tenth hole channel by using the third hole; the twelfth opening communicates with the eleventh port, the thirteenth opening communicates with the thirteenth port, and the fourteenth opening communicates with the sixteenth port, so that the fourth hole channel separately communicates with the third hole channel and the eighth hole channel by using the seventh hole; and the fourth hole, the fifth hole, and the sixth hole are all blocked.

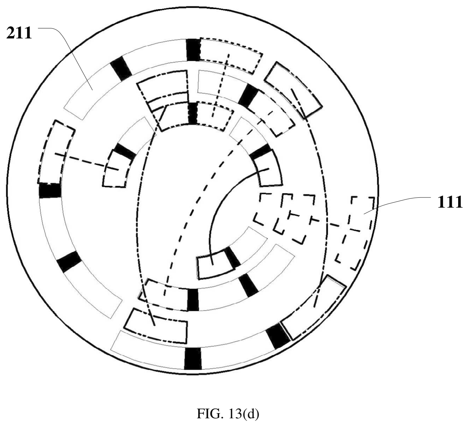

As shown in FIG. 13(d), in a fourth working mode, compared with the third working mode, the first valve body rotates by the preset angle relative to the second valve body, and the first region of the first plane is opposite to the tenth region of the second plane. In this case, the third opening communicates with the twenty-first port, and the fourth opening communicates with the twenty-second port, so that the fifth hole channel communicates with the seventh hole channel by using the second hole; the seventh opening communicates with the eighth port, and the eighth opening communicates with the third port, so that the first hole channel communicates with the second hole channel by using the third hole; the second opening communicates with the fifteenth port, and the ninth opening communicates with the sixth port, so that the third hole channel communicates with the ninth hole channel by using the fourth hole; the eleventh opening communicates with the tenth port, and the sixteenth opening communicates with the twelfth port, so that the sixth hole channel communicates with the eighth hole channel by using the fifth hole; and the tenth opening communicates with the fourth port, and the fifteenth opening communicates with the sixteenth port, so that the fourth hole channel communicates with the tenth hole channel by using the seventh hole.

It is clear that a person skilled in the art can make various modifications and variations to this application without departing from the protection scope of this application. This application is intended to cover these modifications and variations of this application provided that they fall within the scope of the claims of this application and equivalent technologies thereof.

## Claims

1. A temperature control system, wherein the temperature control system comprises a driver, a plurality of liquid pipes, and a multi-way valve; the multi-way valve comprises a first valve body and a second valve body, the first valve body comprises a first plane, the second valve body comprises a second plane, the first plane and the second plane are parallel and attached to each other, and the plurality of liquid pipes are respectively configured to transmit coolant to one or more heat emitting devices; and the driver is configured to drive, based on a temperature of one or more liquid pipes or the heat emitting device, the first plane and the second plane to rotate relative to each other around a rotation axis of the multi-way valve, wherein
the first plane comprises a plurality of groups of first sector ring openings, each group of first sector ring openings comprises two first sector ring openings that are spaced apart, the plurality of first sector ring openings are divided into a plurality of rings by using the rotation axis as a circle center and are spaced apart, and the two first sector ring openings in each group of first sector ring openings communicate with each other by using an internal channel of the first valve body; and
the second plane comprises a plurality of groups of second sector ring openings, each group of second sector ring openings comprises a plurality of second sector ring openings that are spaced apart, each group of second sector ring openings is arranged in an annular manner by using the rotation axis as a circle center, and each second sector ring opening is configured to communicate with at least one first sector ring opening and connect to at least one liquid pipe by using an internal channel of the second valve body.

2. The temperature control system according to claim 1, wherein a central angle of each first sector ring opening is equal to a preset angle value, at least one second sector ring opening in each group of second sector ring openings comprises one or more radial baffle plates, the at least one second sector ring opening is divided into at least two sections of sector ring openings by the radial baffle plate, and a central angle of each section of sector ring opening is equal to the preset angle value.

3. The temperature control system according to claim 2, wherein each radial baffle plate is fastened to the second sector ring opening along a radial direction of the second sector ring opening.

4. The temperature control system according to any one of claims 1 to 3, wherein a difference between an inner diameter and an outer diameter of each second sector ring opening is equal to a preset length value, one first sector ring opening in at least one group of first sector ring openings comprises one circumferential baffle plate, the circumferential baffle plate is configured to divide the second sector ring opening into two layers of sector ring openings, and a difference between an inner diameter and an outer diameter of each layer of sector ring opening is equal to the preset length value.

5. The temperature control system according to claim 4, wherein each circumferential baffle plate is fastened to the first sector ring opening along a circumferential direction of the first sector ring opening.

6. The temperature control system according to any one of claims 1 to 5, wherein the first plane comprises a plurality of rings of first sector ring openings, and the plurality of rings of first sector ring openings comprise a first ring of first sector ring openings, a second ring of first sector ring openings, a third ring of sector ring openings, and a fourth ring of sector ring openings that are sequentially arranged along a direction away from the rotation axis; the second plane comprises a plurality of groups of second sector ring openings, and the plurality of groups of second sector ring openings comprise a first group of second sector ring openings, a second group of second sector ring openings, a third group of second sector ring openings, and a fourth group of second sector ring openings that are sequentially arranged along the direction away from the rotation axis; and
each ring of first sector ring openings is located in a same circular ring, and each group of second sector ring openings is located in a same circular ring; circular rings in which the plurality of groups of second sector ring openings are located are in a one-to-one correspondence with circular rings in which the plurality of rings of first sector ring openings are located; and each second sector ring opening is configured to communicate with a first sector ring opening located in a same circular ring.

7. The temperature control system according to claim 6, wherein the first plane comprises the first ring of first sector ring openings, the first ring of first sector ring openings comprises six first sector ring openings, and the six first sector ring openings are respectively located in five groups of first sector ring openings; and the second plane comprises the first group of second sector ring openings, the first group of second sector ring openings comprises four second sector ring openings, each second sector ring opening in the first group of second sector ring openings comprises one radial baffle plate, and each second sector ring opening in the first group of second sector ring openings is configured to communicate with any first sector ring opening in the first ring of first sector ring openings.

8. The temperature control system according to claim 6 or 7, wherein the first plane comprises the second ring of first sector ring openings, the second ring of first sector ring openings comprises four first sector ring openings, and the four first sector ring openings are respectively located in three groups of first sector ring openings; and the second plane comprises the second group of second sector ring openings, the second group of second sector ring openings comprises two second sector ring openings, one second sector ring opening in the second group of second sector ring openings comprises one radial baffle plate, the other second sector ring opening in the second group of second sector ring openings comprises two radial baffle plates, and each second sector ring opening in the second group of second sector ring openings is configured to communicate with any first sector ring opening in the second ring of first sector ring openings.

9. The temperature control system according to any one of claims 6 to 8, wherein the first plane comprises the third ring of first sector ring openings, the third ring of first sector ring openings comprises four first sector ring openings, and the four first sector ring openings are respectively located in three groups of first sector ring openings; and the second plane comprises the third group of second sector ring openings, the third group of second sector ring openings comprises three second sector ring openings, two second sector ring openings in the third group of second sector ring openings each comprise two radial baffle plates, and each second sector ring opening in the third group of second sector ring openings is configured to communicate with any first sector ring opening in the third ring of first sector ring openings.

10. The temperature control system according to any one of claims 6 to 9, wherein the first plane comprises the fourth ring of first sector ring openings, the fourth ring of first sector ring openings comprises two first sector ring openings, and the two first sector ring openings are respectively located in two groups of first sector ring openings; and the second plane comprises the fourth group of second sector ring openings, the fourth group of second sector ring openings comprises one second sector ring opening, the second sector ring opening in the fourth group of second sector ring openings comprises two radial baffle plates, and each second sector ring opening in the fourth group of second sector ring openings is configured to communicate with any first sector ring opening in the fourth ring of first sector ring openings.

11. The temperature control system according to any one of claims 1 to 10, wherein one end of at least one second internal channel has at least two third sector ring openings, and a liquid pipe that communicates with any one of the third sector ring openings communicates with the corresponding second internal channel.

12. The temperature control system according to any one of claims 1 to 11, wherein the first valve body is a cylindrical valve body, the second valve body comprises a first end cover, a second end cover, and a cylinder, the first end cover and the second end cover are connected to two ends of the cylinder, and the second internal channel is located at the first end cover; and the first end cover, the second end cover, and the cylinder form a cylindrical mounting cavity through enclosure, the cylindrical valve body is mounted in the cylindrical mounting cavity, an outer surface of the cylindrical valve body is attached to the cylindrical mounting cavity, the first plane is attached to the second plane, and the first valve body rotates in the cylindrical mounting cavity when being driven by the driver.

13. A vehicle, comprising a battery pack and the temperature control system according to any one of claims 1 to 12, wherein the at least one liquid pipe is attached to the battery pack in a thermally conductive manner, and the temperature control system is configured to control a temperature of the battery pack.

14. An energy storage system, comprising a battery pack and the temperature control system according to any one of claims 1 to 12, wherein the at least one liquid pipe is attached to the battery pack in a thermally conductive manner, and the temperature control system is configured to control a temperature of the battery pack.

15. A multi-way valve, comprising a first valve body and a second valve body, wherein
the first valve body comprises a first plane, the second valve body comprises a second plane, the first plane and the second plane are parallel and attached to each other, and a plurality of liquid pipes are respectively configured to transmit coolant to one or more heat emitting devices; and a driver is configured to drive, based on a temperature of one or more liquid pipes or the heat emitting device, the first plane and the second plane to rotate relative to each other around a rotation axis of the multi-way valve, wherein
the first plane comprises a plurality of groups of first sector ring openings, each group of first sector ring openings comprises two first sector ring openings that are spaced apart, the plurality of first sector ring openings are divided into a plurality of rings by using the rotation axis as a circle center and are spaced apart, and the two first sector ring openings in each group of first sector ring openings communicate with each other by using an internal channel of the first valve body; and
the second plane comprises a plurality of groups of second sector ring openings, each group of second sector ring openings comprises a plurality of second sector ring openings that are spaced apart, each group of second sector ring openings is arranged in an annular manner by using the rotation axis as a circle center, and each second sector ring opening is configured to communicate with at least one first sector ring opening and connect to at least one liquid pipe by using an internal channel of the second valve body.
